(19) Europäisches Patentamt
European Patent Office
Office européen des brevets

(11) EP 0 832 911 B1

(12) EUROPÄISCHE PATENTSCHRIFT

(45) Veröffentlichungstag und Bekanntmachung des Hinweises auf die Patenterteilung:
**27.09.2000 Patentblatt 2000/39**

(51) Int Cl.[7]: **C08G 77/18**, C08G 77/20, C08G 77/22, C08G 77/26

(21) Anmeldenummer: **97113193.3**

(22) Anmeldetag: **31.07.1997**

(54) **Glycidether-, Acryl- und/oder Methacryl-funktionelle Organopoly-siloxan-haltige Zusammensetzungen auf Wasser-Basis, Verfahren zu deren Herstellung sowie deren Verwendung**

Glycidether, acryl- and/ or methacryl-functional waterborne organopolysiloxane-containing compositions, process for their preparation and their use

Compositions aqueuses contenant des organopolysiloxanes à fonction acrylique, méthacrylique et/ou d'éther glycidylique, leur procédé de préparation et utilisation

(84) Benannte Vertragsstaaten:
**AT BE CH DE ES FR GB IT LI NL SE**

(30) Priorität: **27.09.1996 DE 19639782**

(43) Veröffentlichungstag der Anmeldung:
**01.04.1998 Patentblatt 1998/14**

(73) Patentinhaber: **Degussa-Hüls Aktiengesellschaft 60287 Frankfurt am Main (DE)**

(72) Erfinder:
- **Standke, Burkhard, Dr.**
  **79540 Lörrach (DE)**
- **Edelmann, Roland**
  **79664 Wehr (DE)**
- **Frings, Albert-Johannes, Dr.**
  **79618 Rheinfelden (DE)**
- **Horn, Michael, Dr.**
  **79618 Rheinfelden (DE)**
- **Jenkner, Peter, Dr.**
  **79618 Rheinfelden (DE)**
- **Laven, Ralf, Dr.**
  **79739 Schwörstadt-Niederdossenbach (DE)**
- **Mack, Helmut, Dr.**
  **79618 Rheinfelden (DE)**
- **Monkiewicz, Jaroslaw, Dr.**
  **79618 Rheinfelden (DE)**

(56) Entgegenhaltungen:
**EP-A- 0 542 022**
**EP-A- 0 716 127**
**EP-A- 0 716 128**
**WO-A-96/04339**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 832 911 B1

Printed by Jouve, 75001 PARIS (FR)

## Beschreibung

Die Erfindung betrifft Organopolysiloxan-haltige Zusammensetzungen auf Wasser-Basis, die im wesentlichen frei von organischen Lösemitteln sind, einen Flammpunkt von mehr als 70 °C besitzen und bei Verdünnen mit Wasser im wesentlichen keine Alkohole durch Hydrolyse freisetzen, ein Verfahren zu deren Herstellung sowie deren Verwendung. Die erfindungsgemäßen Organopolysiloxan-haltigen Zusammensetzungen sind im wesentlichen frei von Lösemitteln. Unter lösemittelfreien Zusammensetzungen sind hier solche zu verstehen, die keine aliphatischen oder aromatischen Kohlenwasserstoffe, Halogenkohlenwasserstoffe, Glykole, Glykolether, Ether, Ketone, Ester, Amide und andere Stickstoff-Verbindungen sowie Schwefel- und Nitroverbindungen auf rein organischer Basis sowie Protonen- (bzw. Wasserstoff)freie Lösemittel in Anteilen von mehr als 100 Gew.-ppm enthalten. Hingegen werden Protonenhaltige Agenzien, wie Wasser, anorganische oder organische Säuren, Alkohole, wie Methanol, Ethanol, n- und i-Propanol sowie höhere Alkohole in dieser Reihe, nachfolgend nicht als organische Lösemittel angesehen.

Organosilane der allgemeinen Formel $R^0$ - Si $(OR^1)_3$, mit $R^0$ als organischem Rest und $R^1$ als Methyl- bzw. Ethyl-Rest, finden vielfältige Anwendungen, z. B. als Haftvermittler, Trennmittel, Rheologieverbesserer, Vernetzer, Hydrophobierungsmittel.

Aus ökologischen, arbeitssicherheitstechnischen und ökonomischen Gründen geht man immer mehr dazu über, ihre Applikation in wäßriger Form vorzunehmen. Hierbei treten in der Regel folgende Probleme auf:

- Durch Hydrolyse werden Alkohole freigesetzt:

$$R^0\text{-Si}(OR^1)_3 + 3\ H_2O \rightarrow R^0\text{-Si}(OH)_3 + 3R^1OH$$

  Freie Alkohole erniedrigen den Flammpunkt der Anwendungslösung, so daß explosionsgeschützte Maschinen und Spezialgeräte für die notwendigen Verarbeitungsschritte eingesetzt werden müssen. Aus toxikologischen Gründen müssen die mit dem Umgang betrauten Mitarbeiter zusätzlich geschult und geschützt werden. Ferner kann die Entsorgung der gebrauchten Anwendungslösung aufgrund der Hydrolysealkohole Schwierigkeiten bereiten. Spezielle Abwasserkläranlagen, aber auch Anlagen zur Abgas- bzw. Abluftnachbehandlung werden benötigt.

- Das in Wasser zu applizierende Organosilan ist nicht wasserlöslich:

$$R^0\text{-Si}(OR^1)_3 + 1{,}5\ H_2O \rightarrow R^0\text{-SiO}_{1,5} + 3\ R^1OH$$

Das danach gebildete Hydrolysat R-$SiO_{1,5}$ fällt als polymeres Silikonharz aus dem Reaktionsgemisch aus, so daß es für die gewünschte Anwendung nicht mehr zur Verfügung steht. Organosilane mit sehr stark hydrophobem Charakter, wie z. B. Alkylalkoxysilane, insbesondere mit langem oder verzweigtem Kohlenstoffgerüst, hydrolysieren zwar nur sehr langsam, sind aber in Wasser nicht löslich.

Acryl-, Methacryl- sowie Glycidether-funktionelle monomere Organosilane wie z. B. Methacryloxypropyltrimethoxysilan (DYNASYLAN® MEMO) oder Glycidyloxypropyltrimethoxysilan (DYNASYLAN® GLYMO) sind zwar in Wasser in erheblichen Mengen löslich, neigen jedoch in wäßriger Lösung zur Polykondensation und sind damit in wäßriger Lösung nicht lagerstabil. GLYMO ist beispielsweise in Wasser nur ca. 10 Tage lagerstabil, MEMO dagegen nur ca. 2 Tage (vgl. HÜLS Produktinformationsschrift: Anwendung von organofunktionellen Silanen DYNASYLAN®, Juli 1994).

Um die bekannten, zuvor beschriebenen Nachteile zu mildern, wurden in der zurückliegenden Zeit verschiedenste Verfahren angeregt:
Einige Organosilane, wie z. B. Aminoalkylalkoxysilane, sind zwar in wäßriger Lösung stabil, besitzen jedoch nur eingeschränkte Einsatzfähigkeit in den vielfältigen Einsatzmöglichkeiten organofunktioneller Silane. Die Einführung weiterer organischer Funktionalitäten, insbesondere mehrere Funktionalitäten in einem Molekül auf Basis von in wäßriger Lösung an sich nicht stabilen Organosilanen, ist im Hinblick auf eine Modifizierung der Anwendungseigenschaften von hohem Interesse.

Die Maßnahme der destillativen Entfernung von Hydrolysealkoholen während der Synthese für die Herstellung von Organosilan-Zubereitungen aus wasserlöslichen Organosilanen, wie z. B. aus 3-Aminopropyltriethoxysilan, ist bekannt. Wasserbasierende Aminosilansysteme mit geringem Alkoholanteil und ansonsten lösemittelfrei, sind auf diese Weise zugänglich und beispielsweise in Form von DYNASYLAN® 1151 marktgängig.

Bei der ebenfalls zum Stand der Technik gehörenden Emulsionsmethode wird das an sich nicht wasserverträgliche Organosilan unter Zuhilfenahme von Emulgatoren in Wasser emulgiert (EP-OS 0 442 098, EP-PS 0 358 652,

US 4 620 878). Nachteilig ist hier, daß die Produkte merkliche Anteile Tenside als Emulgatoren enthalten sowie erhebliche Mengen Alkohol freisetzen können.

Die Zubereitung von Silan-Kombinationen in Wasser wird in der US-Patentschrift 5 073 195 offenbart. Die Silan-Zubereitungen werden aus einem nicht wasserlöslichen Alkyltrialkoxysilan und einem wasserlöslichen Silan, wie z. B. einem Aminoalkylalkoxysilan, in einem molaren Verhältnis zwischen 1 : 2 bis 3 : 1 hergestellt. Wie den Beispielen der US-Patentschrift zu entnehmen ist, erfolgt die Herstellung der Zubereitungen durch eine unterstöchiometrische Hydrolyse des Silangemisches und Strippen der Reaktionsmischung bei 60 °C unter vermindertem Druck, für nachfolgende Anwendungen werden so erhaltene Silan-Zubereitungen auch mit Wasser verdünnt. Durch das Verdünnen mit Wasser erfolgt aber die Abspaltung der bei der unvollständigen Hydrolyse verbleibenden Alkoxygruppen in Form der entsprechenden Alkohole. Die hier offenbarten Silan-Cohydrolysate enthalten somit freie Alkohole in deutlichen Mengen und können darüber hinaus weitere Mengen Alkohol durch Hydrolyse freisetzen, wodurch die Anwendungseigenschaften der Produkte nachteilig beeinflußt werden.

Die europäische Patentanmeldung EP 0 592 022 A1 lehrt gemäß Beispiel 1 die Herstellung eines sauren Hydrolysats von Glycidyloxypropyltrimethoxysilan, wobei die Zubereitung noch einen deutlichen Gehalt an Alkohol aufweist.

Ferner offenbart WO 96/04339 saure Hydrolysate aus einem wasserlöslichen Aminosilan und einem nichtwasserlöslichen alkenylfunktionellen Silan. Der Alkoholgehalt solche Hydrolysate kann durch Strippen oder durch Stehenlassen der Zubereitung an der Luft herabgesetzt werden.

Die Praxis zeigt, daß die beiden zuvor dargelegten Systeme bei besagter Handhabung rasch gelieren bzw. noch einen deutlichen Gehalt an Alkohol aufweisen.

In der europäischen Patentanmeldungen EP-OS 0 675 128 wird die Modifizierung wasserbasierender Organosilan-Zubereitungen mit geringen Mengen an sich nicht wasserlöslichen Organosilanen, wie beispielsweise Methyltrimethoxysilan oder Vinyltrimethoxysilan, beschrieben. Nach diesem Verfahren ist ein molares Verhältnis der nicht wasserlöslichen Komponente zu der wasserlöslichen Komponente von 1 : 2,5 erreichbar. Bei einem höheren Anteil nicht wasserlöslicher Silane bilden sich hochviskose Produkte, die mit der Zeit gelieren. Die Anwendungseigenschaften entsprechen im wesentlichen denen der zuvor genannten wasserbasierenden Organosilan-Zubereitungen. Nicht zugänglich nach diesem Verfahren sind über Monate stabile wäßrige Lösungen mit höheren Anteilen nicht wasserlöslicher Organosilane. Die Herstellung von wäßrigen Lösungen mit hohen Anteilen stark hydrophober Silane, wie z. B. Isobutyltrimethoxysilan, ist auf diese Weise nicht möglich.

In den EP-OS 0 716 127 und EP-OS 0 716 128 wird die Herstellung von wasserlöslichen, lösemittelfreien und im wesentlichen von Hydrolysealkoholen freien Organosilan-Zubereitungen basierend auf einem als "Trägersilan" dienenden wasserlöslichen Silan (Aminosilan) mit hohen Anteilen an nicht wasserlöslichen Silanen (Alkylsilane, Vinylsilane, Ureidosilane) beschrieben. Die Wasserlöslichkeit der Zubereitungen wird durch gezielte Cohydrolyse von Aminosilanen mit nicht wasserlöslichen Silanen, anschließender Neutralisierung der Aminofunktion mit Säuren und Destillation der Hydrolysealkohole erreicht. Jedoch sind die haftvermittelnden Eigenschaften dieser Systeme für einige Anwendungen nur wenig befriedigend. Zusätzlich besteht der Bedarf für Organosilansysteme, die auf einer zu silanisierenden, meist mineralischen Oberfläche aufgebracht, gleichzeitig sowohl hydrophobe wie auch haftvermittelnde Effekte bewirken. Es besteht daher auch Bedarf an wasserbasierenden und im wesentlichen lösemittelfreien Organosilan-Zubereitungen mit nur geringem Alkoholgehalt, die man z. B. anstelle hydrophobierend wirkender Silane, wie Alkylalkoxysilane, einsetzen kann und die ebenfalls auf einer zu silanisierenden mineralischen Oberfläche sowohl hydrophobierende wie auch zufriedenstellende haftvermittelnde Wirkung zeigen.

Der Erfindung lag somit die Aufgabe zugrunde, im wesentlichen lösemittelfreie funktionelle Organosilan-Zubereitungen auf Wasser-Basis zu entwickeln, die einen möglichst geringen Gehalt an freien Alkoholen aufweisen, einen Flammpunkt oberhalb 70 °C besitzen, beim Verdünnen mit Wasser im wesentlichen keine Alkohole durch Hydrolyse freisetzen und insbesondere hydrophobierende sowie zufriedenstellende haftvermittelnde Wirkung zeigen.

Die gestellte Aufgabe wird erfindungsgemäß entsprechend den Angaben der Patentansprüche gelöst.

Es wurde nun überraschenderweise gefunden, daß im wesentlichen lösemittelfreie, wasserlösliche Organopolysiloxan-haltige Zusammensetzungen, welche insbesondere Glycidetherfunktionen und/oder Methacryl- und/oder Acrylfunktionen enthalten, darüber hinaus einen Flammpunkt oberhalb 70 °C besitzen und beim Verdünnen mit Wasser im wesentlichen keine Alkohole durch Hydrolyse freisetzen, bei Anwendung sowohl gute hydrophobierende als auch in hervorragender Weise haftvermittelnde Eigenschaften aufweisen. Darüber hinaus kann es von Vorteil sein, wenn die vorliegenden Organopolysiloxan-haltigen Zusammensetzungen als weitere funktionelle Gruppen Aminopropyl-Reste oder Kohlenwasserstoff-Reste oder Aminoalkyl- und Kohlenwasserstoff-Reste enthalten.

Gegenstand der vorliegenden Erfindung sind somit Organopolysiloxan-haltige Zusammensetzungen auf Wasser-Basis, die im wesentlichen frei von organischen Lösemitteln sind, einen Flammpunkt von mehr als 70 °C besitzen und bei Verdünnen mit Wasser im wesentlichen keine Alkohole durch Hydrolyse freisetzen, als funktionelle Gruppen Glycidetheralkyl- und/oder Acryloxyalkyl- und/oder Methacryloxyalkyl-Reste enthalten, wobei jedes Silicium im Organopolysiloxan eine funktionelle Gruppe trägt, und der Alkoholgehalt in den Organopolysiloxan-haltigen Zusammensetzungen weniger als 5 Gew.-% beträgt. Bevorzugt enthalten die erfindungsgemäßen Organopolysiloxan-haltigen Zusammensetzungen als weitere funktionelle Gruppen Aminoalkyl-Reste oder Alkyl-Reste oder Aminoalkyl- und Alkyl-Reste, wie sie beispielsweise aus den allgemeinen Formeln I sowie IV zu entnehmen sind.

Die erfindungsgemäßen Organopolysiloxan-haltigen Zusammensetzungen sind im wesentlichen frei von organischen Lösemitteln, können aber geringe Mengen an Alkoholen, insbesondere Methanol und/oder Ethanol, enthalten. Der Alkohol-Gehalt in den erfindungsgemäßen Organosiloxan-haltigen Zusammensetzungen beträgt weniger als 5 Gew.-%, vorzugsweise weniger als 1,5 Gew.-% und besonders vorzugsweise weniger als 0,5 Gew.-%.

Die erfindungsgemäßen Organopolysiloxan-haltigen Zusammensetzungen weisen vorzugsweise einen pH-Wert zwischen 1 und 8, besonders vorzugsweise einen pH-Wert zwischen 3 und 6, ganz besonders vorzugsweise einen pH-Wert zwischen 3 und 5, auf. Geeigneterweise enthalten diese eine einwertige anorganische und/oder organische Säure und/oder deren Folgeprodukte. Unter Folgeprodukten versteht man hier Verbindungen wie Alkalihalogenide, insbesondere Natrium- oder Kaliumchlorid, Alkaliacetate, Alkaliformiate, Alkalinitrate oder Verbindungen der Aminogruppierungen in den Organopolysiloxanen mit anorganischen oder organischen Säure-Resten, wie sie der allgemeinen Formel V zu entnehmen sind.

Bedingt durch eine vorteilhafte Teilmaßnahme bei der Herstellung können die erfindungsgemäßen Organopolysiloxan-haltigen Zusammensetzungen einen Entschäumer, vorzugsweise eine Silikonharz-Suspension, enthalten.

Geeigneterweise sind die erfindungsgemäßen Organopolysiloxan-haltige Zusammensetzungen erhältlich durch

- Mischen wasserlöslicher Organosilane der allgemeinen Formel I

$$H_2N(CH_2)_f(NH)_g(CH_2)_i\text{- }Si(CH_3)_h(OR)_{3-h} \quad \text{(I),}$$

worin $0 \le f \le 6$, g=0 falls f=0, g=1 falls f>1, $0 \le i \le 6$, $0 \le h \le 1$ und R eine Methyl-, Ethyl-, Propyl- oder Isopropyl-Gruppe sind, vorzugsweise Aminopropyltriethoxysilan,

mit wasserlöslichen, jedoch in wäßrigem Medium nicht stabilen Organosilanen der allgemeinen Formel II

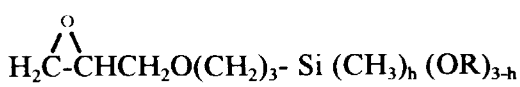

(II),

worin $0 \le h \le 1$ ist und R einen Methyl-, Ethyl-, Propyl- oder Isopropyl-Rest darstellt,

vorzugsweise Glycidyloxypropyltrimethoxysilan,

und/oder Organosilanen der allgemeinen Formel III

$$H_2C{=}CR'\text{-}COO(CH_2)_3\text{- }Si(CH_3)_h(OR)_{3-h} \quad \text{(III),}$$

worin $0 \le h \le 1$ ist, R einen Methyl-, Ethyl-, Propyl- oder Isopropyl-Rest und R' einen Methyl- oder Wasserstoff-Rest darstellen,

vorzugsweise Methacryloxypropyltrimethoxysilan,

und nicht wasserlöslichen Organosilanen der allgemeinen Formel IV

$$R''\text{-}Si(CH_3)_h(OR)_{3-h} \quad \text{(IV),}$$

worin $0 \le h \le 1$ ist, R einen Methyl-, Ethyl-, Propyl- oder Isopropyl-Rest und R'' einen linearen, verzweigten oder cyclischen Kohlenwasserstoff-Rest mit 1 bis 8 C-Atomen darstellen,

vorzugsweise Propyltrimethoxysilan,

- in dem molaren Verhältnis M = a/(b+c+d),

wobei a die Summe der Molzahlen der Organosilane gemäß Formel I, b die Summe der Molzahlen der Organosilane gemäß Formel II sowie c die Summe der Molzahlen der Organosilane gemäß Formel III und d die Summe der Molzahlen der Organosilane gemäß Formel IV sind, mit $0 \le M \le 3$ und mindestens b>0 oder c>0, vorzugsweise für M gleich 0 mit a gleich 0 und/oder c gleich d gleich 0 und b ≥ 1 sowie vorzugsweise $0{,}5 \le M \le 3$,

- Versetzen des Gemisches mit einem Wasser/Säure-Gemisch,
- Einstellen des pH-Wertes der Reaktionsmischung auf einen Wert zwischen 1 und 8 und
- Entfernen des bereits vorhandenen und/oder bei der Umsetzung entstandenen Alkohols durch Destillation, wobei man gleichzeitig Wasser in dem Maße zugibt, wie Alkohol aus dem Reaktionsmedium entfernt wird, und man die destillative Abtrennung des Alkohols solange durchführt, bis am Kopf der Kolonne eine Temperatur erreicht ist, die der Siedetemperatur von Wasser entspricht.

Die erfindungsgemäßen Organosilanpolykondensate besitzen nach chemischer Plausibilität im allgemeinen die in Formel V wiedergegebene Näherungsstruktur. Eine vollständige Strukturaufklärung mit gängigen Methoden der Polymeranalytik gelingt aufgrund der sehr hohen Reaktivität der organofunktionellen Siloxane bisher nicht.

Somit genügen die erfindungsgemäßen Organopolysiloxan-haltige Zusammensetzungen geeigneterweise der allgemeinen Formel V

$$HO[Si(A)(OH)_z(CH_3)_{1-z}O]_a[Si(B)(OH)_y(CH_3)_{1-y}O]_b[Si(C)(OH)_w(CH_3)_{1-w}O]_c[Si(D)(OH)_v(CH_3)_{1-v}O]_dH\cdot(HX)_e \quad (V),$$

worin A einen Aminoalkyl-Rest abgeleitet aus der allgemeinen Formel I,

B einen Glycidetheralkyl-Rest abgeleitet aus der allgemeinen Formel II,

C einen Acryloxyalkyl- sowie Methacryloxyalkyl-Rest abgeleitet aus der allgemeinen Formel III und D einen Alkyl-Rest gemäß der allgemeinen Formel IV bedeuten,

HX eine Säure darstellt, vorzugsweise eine einbasige Säure, wobei X ein anorganischer oder organischer Säure-Rest ist, wie z. B. Chlorid, Nitrat, Formiat oder Acetat,

v gleich 0 oder 1 und w gleich 0 oder 1 und y gleich 0 oder 1 und z gleich 0 oder 1 und $a+b+c+d \geq 4$ und $a \leq e \leq 2a$ sind, mit $0 \leq a/(b+c+d) \leq 3$, insbesondere für a/(b+c+d) gleich 0 mit a gleich 0 und/oder c gleich d gleich 0 und $b \geq 1$ sowie für $0{,}5 \leq a/(b+c+d) \leq 3$.

Gegenstand der vorliegenden Erfindung ist ferner ein Verfahren zur Herstellung erfindungsgemäßer Organopolysiloxan-haltiger Zusammensetzungen, das dadurch gekennzeichnet ist, daß man

- a Mol wasserlösliche Organosilane der allgemeinen Formel I, b und/oder c Mol in wäßriger Lösung instabile Organosilane der allgemeinen Formeln II und/oder III und d Mol nicht wasserlösliche Organosilane der allgemeinen Formel IV
- in dem molaren Verhältnis $0 \leq a/(b+c+d) \leq 3$,
  geeigneterweise auch für a/(b+c+d) gleich 0 mit a gleich 0 und/oder c gleich d gleich 0 und $b \geq 1$ sowie vorzugsweise auch für $0{,}5 \leq a/(b+c+d) \leq 3$, mischt,
- das Gemisch mit einem Wasser/Säure-Gemisch vermischt,
  wobei man die Säuremenge so gewählt, daß die Reaktionsmischung einen pH-Wert im Bereich von 1 bis 8 aufweist,
- und den bereits vorhandenen und/oder bei der Umsetzung entstandenen Alkohol destillativ entfernt, dabei gleichzeitig Wasser in dem Maße zugibt, wie Alkohol aus dem Reaktionsmedium entfernt wird, und man die destillative Abtrennung des Alkohols solange durchführt, bis am Kopf der Kolonne eine Temperatur erreicht ist, die der Siedetemperatur von Wasser entspricht.

Im allgemeinen wird das erfindungsgemäße Verfahren zur Herstellung besagter Organosiloxan-haltiger Zusammensetzungen wie nachfolgend detailliert beschrieben durchgeführt:

Üblicherweise werden zunächst wasserlösliche Organosilane der allgemeinen Formel I mit nicht wasserstabilen Organosilanen der allgemeinen Formeln II und III sowie mit nicht wasserlöslichen Organosilanen der allgemeinen Formel IV gemischt. Anschließend kann das Reaktionsgemisch in ein Wasser/Säure-Gemisch dosiert werden. Vorzugsweise werden 0,5 bis 30 Mole Wasser verwendet, besonders vorzugsweise 1 bis 5 Mole Wasser pro Mol der eingesetzten Organosilane. Die Dosierung erfolgt vorzugsweise portionsweise mit zeitlichen Unterbrechungen. Man kann den Vorgang der Dosierung aber auch kontinuierlich mit zeitlichen Unterbrechungen durchführen oder die diskontinuierliche und kontinuierliche Vorgehensweise der Dosierung miteinander in geeigneter Weise kombinieren.

Geeigneterweise wird der pH-Wert der Reaktionsmischung auf einen Wert zwischen 1 und 8, vorzugsweise auf einen Wert zwischen 3 und 6, besonders vorzugsweise auf einen Wert zwischen 3 und 5, eingestellt. Als Säurekomponente wird im allgemeinen eine anorganische oder organische Säure, vorzugsweise eine einbasige Säure, besonders vorzugsweise Salpetersäure oder Salzsäure oder Essigsäure oder Ameisensäure oder Gemische der vorgenannten Säuren, zugegeben.

Die Umsetzung wird im allgemeinen in einem Temperaturbereich zwischen 0 und 100 °C, vorzugsweise in einem Temperaturbereich zwischen 10 und 80 °C und besonders vorzugsweise zwischen 20 und 60 °C, durchgeführt. Geeigneterweise erfolgt die Umsetzung unter Rühren.

Der bereits vorhandene und/oder bei der Umsetzung entstandene Alkohol wird im allgemeinen aus dem Reaktionsgemisch entfernt. Vorzugsweise wird der bereits vorhandene und/oder bei der Umsetzung entstandene Alkohol destillativ entfernt und dabei gleichzeitig Wasser in dem Maße zugegeben, wie Alkohol aus dem Reaktionsgemisch entfernt wird. Die destillative Abtrennung des Alkohols wird vorzugsweise unter vermindertem Druck durchgeführt. Die destillative Abtrennung des Alkohols wird vorzugsweise solange durchgeführt, bis im Kopf der Kolonne eine Temperatur erreicht ist, die der Siedetemperatur von Wasser entspricht.

Eine Einstellung des pH-Wertes im Reaktionsmedium kann durch Zugabe einer - organischen oder anorganischen, insbesondere einer einwertigen Säure auch während und/oder nach der destillativen Abtrennung der Alkohole erfolgen.

Bei dem erfindungsgemäßen Verfahren wird der Restgehalt an Alkohol in den Organopolysiloxan-haltigen Zusammensetzungen auf kleiner 5 Gew.-%, vorzugsweise auf kleiner 1,5 Gew.-%, besonders vorzugsweise auf kleiner 0,5 Gew.-%, eingestellt.

Zur Verminderung der Schaumbildung wird vor und/oder während der destillativen Abtrennung des Alkohols vorzugsweise ein Entschäumer, besonders vorzugsweise eine wäßrige Silikonharz-Suspension, zugesetzt.

Manchmal treten während oder nach Beendigung der Destillation im Produkt Trübungen oder Ausfällungen auf, diese rühren vielfach von dem zugesetzten Entschäumer her. Um ein klares Produkt zu erhalten, wird geeigneterweise das erhaltene Produkt nach der destillativen Abtrennung des Alkohols durch Sedimentation und/oder Filtration nachgereinigt. Die Filtration sowie die Entfernung des Sediments kann beispielsweise über eine Drucknutsche, einen Separator, einen Dekanter oder ähnliche Apparate erfolgen.

Nach dem erfindungsgemäßen Verfahren hergestellte Produkte sind stabile und klare Lösungen. Die erfindungsgemäßen Organopolysiloxan-haltigen Zusammensetzungen lassen sich mit Wasser in jedem Verhältnis verdünnen, entwickeln bei Wasserzugabe im wesentlichen keine Hydrolysealkohole, besitzen einen Flammpunkt von mehr als 70 °C, vorzugsweise von mehr als 95 °C, besonders vorzugsweise von mehr als 98 ° C, und sind im wesentlichen frei von organischen Lösemitteln sowie Tensiden als Emulgatoren, Darüber hinaus erfolgt die Verwendung der erfindungsgemäßen bzw. erfindungsgemäß hergestellten wasserlöslichen, multifunktionellen, oligomeren Silansysteme mit deutlichen Vorteilen gegenüber bisher bekannten Produkten, insbesondere für die Silanisierung von mineralischen Oberflächen, z. B. bei der Füllstoff- und Pigmentvorbehandlung zur gleichzeitigen Erzeugung von haftvermittelnden und hydrophobierenden Effekten. Die haftvermittelnden Effekte werden durch die im oligomeren Molekül enthaltenen Amino- sowie Glycidether- und/oder (Meth)acryl-Funktionen bewirkt, wobei ein gegebenenfalls gewünschter hydrophobierender Effekt durch optional vorhandene Alkylfunktionen noch zusätzlich verbessert werden kann.

Somit werden die erfindungsgemäßen Organopolysiloxan-haltigen Zusammensetzungen besonders für die Hydrophobierung von Oberflächen, für die Hydrophobierung von mineralischen Baustoffen, für den Schutz von Bauten und Fassaden, für die Beschichtung von Glasfasern, für die Silanierung von Füllstoffen und Pigmenten, für die Verbesserung der rheologischen Eigenschaften von Polymerdispersionen und Emulsionen, für die Hydrophobierung von Textilien, Leder, Zellulose- und Stärkeprodukten, als Trennmittel, als Vernetzer, insbesondere als Haftvermittler sowie als Zusatzstoffe für Farben und Lacke, bevorzugt verwendet.

Die Erfindung wird durch die folgenden Beispiele näher erläutert:

## Beispiele

Reaktionsapparatur für alle nachfolgenden Beispiele einschließlich Vergleichsbeispiel:

Laborrührkesselreaktor mit 2 1 Inhalt, temperierbar, Innentemperaturmessung, Flüssigkeitsdosiereinrichtung, Destillationsbrücke mit Kopftemperaturmessung, Produktkühler, Destillatvorlagebehälter; Labordrucknutsche (2 1 Inhalt).

Folgende Verfahrensparameter gelten für alle nachfolgenden Beispiele einschließlich Vergleichsbeispiel:

Schäumungsprobleme während der Destillation können verhindert werden, indem der Reaktionslösung einige Tropfen eines handelsüblichen Entschäumers auf Basis wäßriger Silikonharzemulsionen zugesetzt werden. Die aus dem Zusatz von Entschäumer resultierende leichte Trübung kann durch Filtration über eine Drucknutsche mit Glasfaserfilter (Porenweite < 1 um) entfernt werden.

Die in den erfindungsgemäßen Beispielen 1 bis 8 gewonnenen Produkte haben folgende Eigenschaften gemeinsam:

Das Produkt ist klar und in jedem Verhältnis mit Wasser mischbar. Der Gehalt an Alkoholen liegt bei weniger als 0,5 Gew.-%. Der Flammpunkt der Produkte liegt bei Werten > 95 °C und sinkt auch nicht bei weiterem Verdünnen mit Wasser, da keine weitere Hydrolyse stattfindet und somit keine weiteren Alkohole freigesetzt werden.

| | |
|---|---|
| AMEO = | 3-Aminopropyltriethoxysilan, |
| MEMO = | 3-Methacryloxypropyltrimethoxysilan, |
| GLYMO = | 3-Glycidyloxypropyltrimethoxysilan, |
| PTMO = | n-Propyltrimethoxysilan |

**Beispiel 1**

Herstellung eines wasserlöslichen Hydrolysates aus 3-GlycidyloxypropylTrimethoxysilan (GLYMO)

In der oben beschriebenen Apparatur werden 708 g GLYMO vorgelegt. 162 g Wasser und 3,5 g Ameisensäure (85 %ig) werden gemischt und innerhalb von 15 Minuten zudosiert. Die Temperatur steigt hierbei von 20 auf 35 °C. Der Ansatz wird zwei Stunden bei 60 °C gerührt. Danach wird innerhalb von 8 Stunden ein Methanol/Wasser-Gemisch abdestilliert und gleichzeitig gewichtsbezogen durch Wasser ersetzt (Druck: 300-133 mbar; Temperatur: 42-52 °C). Wenn die Kopftemperatur bei 133 mbar ca. 50 °C beträgt und das Kopfprodukt nur noch Wasser enthält, wird die Destillation beendet und es wird die entsprechende Menge Wasser zugegeben, so daß eine Lösung mit w(GLYMO) = 40 % in Wasser entsteht.

**Beispiel 2**

Herstellung eines wasserlöslichen Cohydrolysates aus AMEO und 3-Methacryloxypropyltrimethoxysilan (MEMO) in verschiedenen Molverhältnissen

2a) AMEO/MEMO 1:1

In der oben beschriebenen Apparatur werden 216 g Wasser und 135,2 g Ameisensäure (85 Gew.% in Wasser) vorgelegt und mittels Eisbad gekühlt. 442 g AMEO und 496 g MEMO werden gemischt und innerhalb von ca. 30 Minuten über die Dosiervorrichtung zugegeben. Die Temperatur steigt hierbei von 10 °C auf 25 °C. Das Reaktionsgemisch wird zwei Stunden bei 50 °C gerührt. Danach werden 587 g Wasser zudosiert, so daß eine 50 %ige Silanlösung in Wasser erhalten wird. Innerhalb von ca. 7 Stunden wird ein Ethanol/Methanol/Wasser-Gemisch abdestilliert und gleichzeitig gewichtsbezogen durch Wasser ersetzt, so daß die Konzentration der Lösung konstant bleibt (Druck: 300-133 mbar; Temperatur: 47-52°C). Wenn die Kopftemperatur bei 133 mbar ca. 50 °C beträgt und das Kopfprodukt nur noch Wasser enthält, wird die Destillation beendet.

2b) AMEO/MEMO 2:1

In der oben beschriebenen Apparatur mit einem 500 ml Rührreaktor werden 138 g Wasser und 26 g Ameisensäure (85 Gew.% in Wasser) vorgelegt und mittels Eisbad gekühlt. 88,4 g AMEO und 49,6 g MEMO werden gemischt und innerhalb von ca. 30 Minuten über die Dosiervorrichtung zugegeben. Die Temperatur steigt hierbei von 6 °C auf 10 °C. Das Reaktionsgemisch wird 2 Stunden bei ca. 45 °C gerührt. Innerhalb von ca. 4 Stunden wird ein Ethanol/Methanol/Wasser-Gemisch abdestilliert und gewichtsbezogen gleichzeitig durch Wasser ersetzt, so daß die Konzentration der Lösung konstant bleibt (Druck: 140-100 mbar; Temperatur: 42 °C). Wenn die Kopftemperatur bei 100 mbar ca. 40 °C beträgt und das Kopfprodukt nur noch Wasser enthält, wird die Destillation beendet.

2c) AMEO/MEMO 1:2

In der oben beschriebenen Apparatur mit einem 250 ml Rührreaktor werden 16,2 g Wasser und 6,8 g Ameisensäure (84 Gew.% in Wasser) vorgelegt. 22,1 g AMEO und 49,6 g MEMO werden gemischt und innerhalb von ca. 30 Minuten über die Dosiervorrichtung zugegeben. Die Temperatur steigt hierbei von 20 °C auf 40 °C. Das Reaktionsgemisch wird 3 Stunden bei 40 °C gerührt. Anschließend werden 50 g Wasser zugegeben , so daß eine 50 %ige Silanlösung in Wasser entsteht. Innerhalb von ca. 2 Stunden wird ein Ethanol/Methanol/Wasser-Gemisch abdestilliert und gleichzeitig gewichtsbezogen durch Wasser ersetzt damit die Konzentration der Lösung konstant bleibt (Druck:

200-100 mbar; Temperatur: 40-44 °C). Wenn die Kopftemperatur bei 100 mbar ca. 40 °C beträgt und das Kopfprodukt nur noch Wasser enthält, wird die Destillation beendet.

**Beispiel 3**

Herstellung eines wasserlöslichen Cohydrolysates aus AMEO. GLYMO, MEMO und PTMO im molaren Verhältnis von 3:1:1:1

In der oben beschriebenen Apparatur mit einem 500 ml Rührreaktor werden 16,2 g Wasser und 10,2 g Ameisensäure (84 Gew.% in Wasser) vorgelegt. 33,2 g AMEO, 11,8 g GLYMO, 12,4 g MEMO und 8,2 g PTMO werden gemischt und innerhalb von ca. 2 Minuten über die Dosiervorrichtung zugegeben. Die Temperatur steigt hierbei von 14 °C auf 52 °C. Das Reaktionsgemisch wird 2 Stunden bei 50 °C gerührt. Anschließend werden 70 g Wasser zugegeben so daß eine 40 %ige Silanlösung in Wasser entsteht. Innerhalb von ca. 3 Stunden wird ein Ethanol/Methanol/Wasser-Gemisch abdestilliert und gleichzeitig gewichtsbezogen durch Wasser ersetzt, damit die Konzentration der Lösung konstant bleibt (Druck: 300-133 mbar; Temperatur: 47-52 °C). Wenn die Kopftemperatur bei 133 mbar ca. 50 °C beträgt und das Kopfprodukt nur noch Wasser enthält, wird die Destillation beendet.

**Beispiel 4**

Herstellung eines wasserlöslichen Cohydrolysates aus AMEO, GLYMO und PTMO im molaren Verhältnis von 1:1:1

In der oben beschriebenen Apparatur werden 216 g Wasser und 53 g Ameisensäure (84 Gew.% in Wasser) vorgelegt. 176,8 g AMEO, 188,8 g GLYMO 131,2 g PTMO werden gemischt und innerhalb von ca. 30 Minuten über die Dosiervorrichtung zugegeben. Die Temperatur steigt hierbei von 24 °C auf 55 °C. Das Reaktionsgemisch wird 1 Stunde bei 60 °C gerührt. Anschließend werden 898 g Wasser zugegeben so daß eine 30 %ige Silanlösung in Wasser entsteht. Innerhalb von ca. 6 Stunden wird ein Ethanol/Methanol/Wasser-Gemisch abdestilliert und gleichzeitig gewichtsbezogen durch Wasser ersetzt damit die Konzentration der Lösung konstant bleibt (Druck: 200-133 mbar; Temperatur: 42-52 °C). Wenn die Kopftemperatur bei 133 mbar ca. 50 °C beträgt und das Kopfprodukt nur noch Wasser enthält, wird die Destillation beendet.

**Patentansprüche**

1. Organopolysiloxan-haltige Zusammensetzungen auf Wasser-Basis, die im wesentlichen frei von organischen Lösemitteln sind, einen Flammpunkt von mehr als 70 °C besitzen und bei Verdünnen mit Wasser im wesentlichen keine Alkohole durch Hydrolyse freisetzen, als funktionelle Gruppen Glycidetheralkyl- und/oder Acryloxyalkyl- und/oder Methacryloxyalkyl-Reste enthalten, wobei jedes Silicium im Organopolysiloxan eine funktionelle Gruppe trägt, und der Alkohol-Gehalt in den Organopolysiloxan-haltigen Zusammensetzungen weniger als 5 Gew.-% beträgt

2. Organopolysiloxan-haltige Zusammensetzung nach Anspruch 1,
dadurch gekennzeichnet,
daß diese als weitere funktionelle Gruppen Aminoalkyl-Reste oder Alkyl-Reste oder Aminoalkyl- und Alkyl-Rest enthalten.

3. Organopolysiloxan-haltige Zusammensetzungen nach Anspruch 1 oder 2,
dadurch gekennzeichnet,
daß diese einen pH-Wert zwischen 1 und 8 besitzen.

4. Organopolysiloxan-haltige Zusammensetzungen nach mindestens einem der Ansprüche 1 bis 3,
dadurch gekennzeichnet,
daß diese eine einwertige anorganische und/oder organische Säure und/oder deren Folgeprodukte enthalten.

5. Organopolysiloxan-haltige Zusammensetzungen nach mindestens einem der Ansprüche 1 bis 4,
dadurch gekennzeichnet,
daß diese eine Silikonharz-Suspension enthalten.

6. Organopolysiloxan-haltige Zusammensetzungen nach mindestens einem der Ansprüche 1 bis 5, erhältlich durch

- Mischen wasserlöslicher Organosilane der allgemeinen Formel I

$$H_2N(CH_2)_f(NH)_g(CH_2)_i\text{- }Si(CH_3)_h(OR)_{3-h} \quad (I),$$

worin 0≤f≤6, g=0 falls f=0, g=1 falls f>1, 0≤i≤6 0≤h≤1 und
R eine Methyl-, Ethyl-, Propyl- oder Isopropyl-Gruppe sind,
mit wasserlöslichen, jedoch in wäßrigem Medium nicht stabilen Organosilanen der allgemeinen Formel II

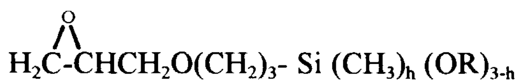

(II),

worin 0≤h≤1 ist und R einen Methyl-, Ethyl-, Propyl- oder Isopropyl-Rest darstellt,
und/oder Organosilanen der allgemeinen Formel III

$$H_2C{=}CR'\text{-}COO(CH_2)_3\text{- }Si\ (CH_3)_h\ (OR)_{3-h} \quad (III),$$

worin 0≤h≤1 ist, R einen Methyl-, Ethyl-, Propyl- oder Isopropyl-Rest und R' einen Methyl- oder Wasserstoff-Rest darstellen,
und nicht wasserlöslichen Organosilanen der allgemeinen Formel IV

$$R''\text{-}Si(CH_3)_h(OR)_{3-h} \quad (IV),$$

worin 0≤h≤1 ist, R einen Methyl-, Ethyl-, Propyl- oder Isopropyl-Rest und R'' einen linearen, verzweigten oder cyclischen Kohlenwasserstoff-Rest mit 1 bis 8 C-Atomen darstellen,

- in dem molaren Verhältnis M = a/(b+c+d),
wobei a die Summe der Molzahlen der Organosilane gemäß Formel I, b die Summe der Molzahlen der Organosilane gemäß Formel II sowie c die Summe der Molzahlen der Organosilane gemäß Formel III und d die Summe der Molzahlen der Organosilane gemäß Formel IV sind, mit 0 ≤ M ≤ 3 und mindestens b > 0 oder c > 0,

- Versetzen des Gemisches mit einem Wasser/Säure-Gemisch,

- Einstellen des pH-Wertes der Reaktionsmischung auf einen Wert zwischen 1 und 8 und

- Entfernen des bereits vorhandenen und/oder bei der Umsetzung entstandenen Alkohols durch Destillation, wobei man gleichzeitig Wasser in dem Maße zugibt, wie Alkohol aus dem Reaktionsmedium entfernt wird, und man die destillative Abtrennung des Alkohols solange durchführt, bis am Kopf der Kolonne eine Temperatur erreicht ist, die der Siedetemperatur von Wasser entspricht.

**7.** Organopolysiloxan-haltige Zusammensetzungen nach mindestens einem der Ansprüchen 1 bis 6,
dadurch gekennzeichnet,
daß sie der allgemeinen Formel V

$$HO[Si(A)(OH)_z(CH_3)_{1-z}O]_a[Si(B)(OH)_y(CH_3)_{1-y}O]_b[Si(C)(OH)_w(CH_3)_{1-w}O]_c[Si(D)(OH)_v(CH_3)_{1-v}O]_dH\cdot(HX)_e \quad (V),$$

worin

A einen Aminoalkyl-Rest abgeleitet aus der allgemeinen Formel I,
B einen Glycidetheralkyl-Rest abgeleitet aus der allgemeinen Formel II,

C einen Acryloxyalkyl- bzw. Methacryloxyalkyl-Rest abgeleitet aus der allgemeinen Formel III und D einen Alkyl-Rest gemäß der allgemeinen Formel IV bedeuten,
HX eine Säure darstellt, wobei X ein anorganischer oder organischer Säure-Rest ist,
v gleich 0 oder 1 und w gleich 0 oder 1 und y gleich 0 oder 1 und z gleich 0 oder 1 und $a+b+c+d \geq 4$ und $a \leq e \leq \underline{2}$ a sind, mit $0 \leq a/(b+c+d) \leq 3$, genügen.

**8.** Verfahren zur Herstellung von Organopolysiloxan-haltigen Zusammensetzungen nach mindestens einem der Ansprüche 1 bis 7,
dadurch gekennzeichnet,
daß man

- a Mol wasserlösliche Organosilane der allgemeinen Formel I, b und/oder c Mol in wäßriger Lösung instabile Organosilane der allgemeinen Formeln II und/oder III und d Mol nicht wasserlösliche Organosilane der allgemeinen Formel IV
- in dem molaren Verhältnis $0 \leq a/(b+c+d) \leq 3$ mischt,
- das Gemisch mit einem Wasser/Säure-Gemisch vermischt,
  wobei man die Säuremenge so gewählt, daß die Reaktionsmischung einen pH-Wert im Bereich von 1 bis 8 aufweist,
- und den bereits vorhandenen und/oder bei der Umsetzung entstandenen Alkohol destillativ entfernt, dabei gleichzeitig Wasser in dem Maße zugibt, wie Alkohol aus dem Reaktionsmedium entfernt wird, und man die destillative Abtrennung des Alkohols solange durchführt, bis am Kopf der Kolonne eine Temperatur erreicht ist, die der Siedetemperatur von Wasser entspricht.

**9.** Verfahren nach Anspruch 8,
dadurch gekennzeichnet,
daß man das Reaktionsgemisch mit 0,5 bis 30 Molen Wasser pro Mol der eingesetzten Organosilane versetzt.

**10.** Verfahren nach Anspruch 8 oder 9,
dadurch gekennzeichnet,
daß man eine einbasige Säure einsetzt.

**11.** Verfahren nach mindestens einem der Ansprüche 8 bis 10,
dadurch gekennzeichnet,
daß man die Umsetzung in einem Temperaturbereich zwischen 0 und 100 °C durchgeführt.

**12.** Verfahren nach mindestens einem der Ansprüche 8 bis 11,
dadurch gekennzeichnet,
daß man die destillative Abtrennung des Alkohols unter vermindertem Druck durchführt.

**13.** Verfahren nach mindestens einem der Ansprüche 8 bis 12,
dadurch gekennzeichnet,
daß man zur Verminderung der Schaumbildung vor und/oder während der destillativen Abtrennung des Alkohols ein Entschäumer zusetzt.

**14.** Verfahren nach mindestens einem der Ansprüche 8 bis 13,
dadurch gekennzeichnet,
daß man den Restgehalt an Alkohol in den Organopolysiloxan-haltigen Zusammensetzungen auf Werte < 1,5 Gew.-% einstellt.

**15.** Verfahren nach mindestens einem der Ansprüche 8 bis 14,
dadurch gekennzeichnet,
daß man das erhaltene Produkt nach der destillativen Abtrennung des Alkohols durch Sedimentation und/oder Filtration nachreinigt.

**16.** Verwendung Organopolysiloxan-haltigen Zusammensetzungen auf Wasser-Basis nach den Ansprüchen 1 bis 15 für die Hydrophobierung von Oberflächen, für die Hydrophobierung von mineralischen Baustoffen, für den Schutz von Bauten und Fassaden, für die Beschichtung von Glasfasern, für die Silanierung von Füllstoffen und Pigmenten, für die Verbesserung der rheologischen Eigenschaften von Polymerdispersionen und Emulsionen, für die Hydrophobierung von Textilien, Leder, Zellulose- und Stärkeprodukten, als Trennmittel, als Vernetzer, als Haftvermittler sowie als Zusatzstoffe für Farben und Lacke.

## Claims

**1.** An organopolysiloxane-containing, water-based composition which is essentially free from organic solvents, has a flash point of above 70°C and liberates essentially no alcohols through hydrolysis on dilution with water, and which contains, as functional groups, glycidyl ether alkyl and/or acryloxyalkyl and/or methacryloxyalkyl radicals, where each silicon in the organopolysiloxane carries one functional group, and the alcohol content in the organopolysiloxane-containing composition is less than 5 % by weight.

**2.** An organopolysiloxane-containing composition according to claim 1, which contains, as further functional groups, aminoalkyl radicals or alkyl radicals or aminoalkyl and alkyl radicals.

**3.** An organopolysiloxane-containing composition according to claim 1 or 2, which has a pH of from 1 to 8.

**4.** An organopolysiloxane-containing composition according to at least one of claims 1 to 3, which contains a monobasic inorganic and/or organic acid and/or a derivative thereof.

**5.** An organopolysiloxane-containing composition according to at least one of claims 1 to 4, which contains a silicone resin suspension.

**6.** An organopolysiloxane-containing composition according to at least one of claims 1 to 5, obtainable by

- mixing water-soluble organosilanes of the general formula I

$$H_2N(CH_2)_f(NH)_g(CH_2)_i\text{-}Si(CH_3)_h(OR)_{3-h} \qquad (I),$$

in which $0 \le f \le 6$, $g = 0$ if $f = 0$, $g = 1$ if $f > 1$, $0 \le i \le 6$, $0 \le h \le 1$ and R is a methyl, ethyl, propyl or isopropyl group,

with organosilanes, which are water-soluble but not stable in aqueous medium, of the general formula II

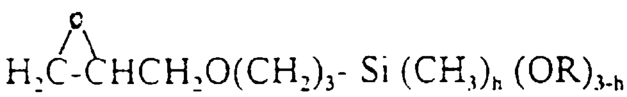

(II),

in which $0 \le h \le 1$, and R is a methyl, ethyl, propyl or isopropyl radical,

and/or organosilanes of the general formula III

$$H_2C{=}CR'\text{-}COO(CH_2)_3\text{-}Si(CH_3)_h(OR)_{3-h} \qquad (III),$$

in which $0 \le h \le 1$, R is a methyl, ethyl, propyl or isopropyl radical, and R' is a methyl or hydrogen radical,

and water-insoluble organosilanes of the general formula IV

$$R''\text{-}Si(CH_3)_h(OR)_{3-h} \qquad (IV),$$

in which $0 \le h \le 1$, R is a methyl, ethyl, propyl or isopropyl radical, and R" is a linear, branched or cyclic hydrocarbon radical having 1 to 8 carbon atoms,

- in the molar ratio M = a/(b+c+d),

where a is the total of the molar amounts of the organosilanes of the formula I, b is the total of the molar amounts of the organosilanes of the formula II and c is the total of the molar amounts of the organosilanes of the formula III and d is the total of the molar amounts of the organosilanes of the formula IV, where $0 \leq M \leq 3$ and at least $b > 0$ or $c > 0$,

- combining the mixture with a water/acid mixture,
- adjusting the pH of the reaction mixture to a value of from 1 to 8, and
- removing the alcohol already present and/or formed during the reaction by distillation, at the same time water being added to the extent that alcohol is removed from the reaction medium, and the removal of the alcohol by distillation being continued until a temperature which corresponds to the boiling point of water is reached at the top of the column.

**7.** An organopolysiloxane-containing composition according to at least one of claims 1 to 6, which conforms to the general formula V

$$HO[Si(A)(OH)_z(CH_3)_{1-z}O]_a[Si(B)(OH)_y(CH_3)_{1-y}O]_b[Si(C)(OH)_w(CH_3)_{1-w}O]_c[Si(D)(OH)_v(CH_3)_{1-v}O]_dH\cdot(HX)_e \quad (V),$$

in which

A is an aminoalkyl radical derived from the general formula I,
B is a glycidyl ether alkyl radical derived from the general formula II,
C is an acryloxyalkyl or methacryloxyalkyl radical derived from the general formula III, and D is an alkyl radical of the general formula IV,
HX is an acid, where X is an inorganic or organic acid radical,
$v = 0$ or 1, $w = 0$ or 1, $y = 0$ or 1 and $z = 0$ or 1, and $a+b+c+d \geq 4$ and $a \leq e \leq 2a$, where $0 \leq a/(b+c+d) \leq 3$.

**8.** A process for the preparation of an organopolysiloxane-containing composition according to at least one of claims 1 to 7, characterized in that

- a mol of water-soluble organosilanes of the general formula I, b and/or c mol of organosilanes of the general formulae II and/or III which are unstable in aqueous solution, and d mol of water-insoluble organosilanes of the general formula IV
- are mixed in the molar ratio $0 \leq a/(b+c+d) \leq 3$,
- the mixture is combined with a water/acid mixture,
  where the amount of acid is selected so that the reaction mixture has a pH in the range from 1 to 8,
- and the alcohol already present and/or formed during the reaction is removed by distillation, at the same time water being added to the extent that alcohol is removed from the reaction medium,and the removal of the alcohol by distillation being continued until a temperature which corresponds to the boiling point of water is reached at the top of the column.

**9.** A process according to claim 8, characterized in that from 0.5 to 30 mol of water are added to the reaction mixture per mole of the organosilanes employed.

**10.** A process according to claim 8 or 9, characterized in that a monobasic acid is employed.

**11.** A process according to at least one of claims 8 to 10, characterized in that the reaction is carried out at a temperature in the range from 0 to 100°C.

**12.** A process according to at least one of claims 8 to 11, characterized in that the removal of the alcohol by distillation is carried out under reduced pressure.

**13.** A process according to at least one of claims 8 to 12, characterized in that an antifoam is added in order to reduce

foam formation before and/or during the removal of the alcohol by distillation .

**14.** A process according to at least one of claims 8 to 13, characterized in that the residual alcohol content in the organopolysiloxane-containing composition is adjusted to < 1.5 % by weight.

**15.** A process according to at least one of claims 8 to 14, characterized in that the product obtained after removal of the alcohol by distillation is subjected to further purification by sedimentation and/or filtration.

**16.** The use of an organopolysiloxane-containing, water-based composition according to any one of claims 1 to 15 for the hydrophobicization of surfaces, for the hydrophobicization of mineral building materials, for the protection of buildings and facades, for the coating of glass fibres, for the silanation of fillers and pigments, for improving the rheological properties of polymer dispersions and emulsions, for the hydrophobicization of textiles, leather, cellulose and starch products, as release agents, as crosslinking agents, as adhesion promoters and as paint and coating additives.

**Revendications**

**1.** Compositions contenant un organopolysiloxane à base d'eau qui sont pour l'essentiel exemptes de solvant organique, qui possèdent un point d'inflammation de plus de 70°C et qui ne libèrent par hydrolyse en dilution avec de l'eau essentiellement aucun alcool, qui renferment comme groupes fonctionnels des restes glycidylétheralkyle, et/ou acryloxyalkyle et/ou méthacryloxyalkyle, dans lesquelles chaque atome de silicium dans l'organopolysiloxane porte un groupe fonctionnel, et dont la teneur en alcool dans les compositions contenant un organopolysiloxane s'élève à moins de 5 % en poids.

**2.** Compositions contenant un polyorganosiloxane selon la revendication 1,
caractérisée en ce que
celles-ci renferment comme autres groupes fonctionnels des restes aminoalkyle ou des restes alkyle ou un reste aminoalkyle et un reste alkyle.

**3.** Compositions contenant un organopolysiloxane selon la revendication 1 ou 2,
caractérisées en ce que
celles-ci possèdent une valeur de pH comprise entre 1 et 8.

**4.** Compositions contenant un organopolysiloxane, selon au moins une des revendications 1 à 3,
caractérisées en ce que
celles-ci renferment un acide minéral et/ou organique monovalent et/ou leurs dérivés.

**5.** Compositions contenant des polyorganosiloxanes selon au moins une des revendications 1 à 4,
caractérisées en ce que
celles-ci renferment une suspension de résine de silicone.

**6.** Compositions contenant un polyorganosiloxane selon au moins l'une quelconque des revendications 1 à 5 qui sont accessibles par :

- mélange d'organosilanes solubles dans l'eau de formule générale I

$$H_2N(CH_2)_f(NH)_g(CH_2)_i\text{-}Si(CH_3)_h(OR)_{3-h} \quad \text{(I),}$$

  dans laquelle $0 \leq f \leq 6$, $g = 0$ au cas où $f = 0$ ; $g = 1$ au cas où $f > l$, $0 \leq i \leq 6$, $0 \leq h \leq 1$,
  et R est un groupe méthyle, éthyle, propyle ou isopropyle, avec
- des organosilanes solubles dans l'eau mais non stables en milieu aqueux, de formule générale II

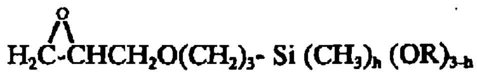 (II),

dans laquelle $0 \leq h \leq 1$ et R représente un radical méthyle, éthyle, propyle ou isopropyle, et/ou

- des organosilanes de formule générale III

$$H_2C{=}CR'\text{-}COO(CH_2)_3\text{-}Si(CH_3)_h(OR)_{3-h} \quad \text{(III)},$$

dans laquelle on a $0 \leq h \leq 1$, R représente un radical méthyle, éthyle, propyle ou isopropyle et R' représente un radical méthyle ou hydrogène,
ainsi que des organosilanes qui ne sont pas solubles dans l'eau de forme générale IV

$$R''\text{-}Si(CH_3)_h\,(OR)_{3-h} \quad \text{(IV)},$$

dans laquelle on a $0 \leq h \leq 1$,
R représente un radical méthyle, éthyle, propyle ou isopropyle, et R" représente un radical hydrocarboné linéaire, ramifié ou cyclique ayant de 1 à 8 atomes de carbone,

- dans le rapport molaire $M = a/(b+c+d)$,
  dans lequel a représente la somme des nombres molaires des organosiloxanes selon la formule I, b la somme des nombres molaires des organosilanes selon la formule II, c la somme des nombres molaires des organosilanes selon la formule III, et d la somme des nombres molaires des organosilanes selon la formule IV, avec $0 \leq M \leq 3$ et au moins $b > 0$ ou $c > 0$,
- mélange du mélange avec un mélange eau/acide
- ajustement de la valeur du pH du mélange réactionnel à une valeur comprise entre 1 et 8 et
- élimination de l'alcool déjà présent et/ou qui s'est formé au cours de la réaction par distillation dans laquelle on verse en même temps de l'eau dans la masse, au fur et à mesure que l'alcool est éliminé du milieu réactionnel, et on effectue la séparation par distillation de l'alcool jusqu'à ce qu'à la tête de la colonne on atteigne une température qui correspond à la température d'ébullition de l'eau.

**7.** Compositions contenant un organopolysiloxane selon au moins l'une quelconque des revendications 1 à 6, caractérisées en ce qu'
elles répondent à la formule générale V

$$HO[Si(A)(OH)_z(CH_3)_{1-z}O]_a[Si(B)(OH)_y(CH_3)_{1-y}O]_b[Si(C)(OH)_w(CH_3)_{1-w}O]_c[Si(D)(OH)_v(CH_3)_{1-v}O]_dH\cdot(HX)_e \quad \text{(V)},$$

dans laquelle

A signifie un reste aminoalkyle dérivé de la formule générale I,
B signifie un reste glycidylétheralkyle dérivé de la formule générale II,
C signifie un reste acryloxyalkyle ou méthacryloxyalkyle dérivé de la formule générale III et
D signifie un radical alkyle selon la formule générale IV, HX représente un acide dans lequel X est un reste d'acide minéral ou organique,
V est égal à 0 ou 1, w est égal à o ou 1,
y est égal à 0 ou 1, z est égal à 0 ou 1, et $a + b + c + d$ est $\geq 4$, et $a \leq e \leq 2a$, avec $0 \leq a/(b + c + d) \leq 3$.

**8.** Procédé de production de compositions contenant un organopolysiloxane selon au moins l'une quelconque des revendications 1 à 7,
caractérisé en ce qu'

- on mélange dans le rapport molaire $0 \leq a/(b + c + d) \leq 3$, a mol d'organosilane soluble dans l'eau de formule générale I, b et/ou c mol d'organosilanes instables en solution aqueuse de formule générale II et/ou III, et d

mol d'organosilane qui n'est pas soluble dans l'eau, de formule générale IV,

- on additionne le mélange d'un mélange eau/acide dans lequel la quantité d'acide est choisie de façon que le mélange réactionnel possède une valeur de pH dans la zone de 1 à 8,
- et on élimine par distillation l'alcool déjà présent et/ou formé au cours de la réaction, auquel on verse en même temps de l'eau dans la mesure où l'alcool est éliminé du milieu réactionnel, et on effectue la séparation par distillation de l'alcool jusquà ce qu'on atteigne à la tête de la colonne une température qui correspond à la température d'ébullition de l'eau.

**9.** Procédé selon la revendication 8,
caractérisé en ce qu'
on additionne le mélange réactionnel de 0,5 à 30 moles d'eau par mol d'organosilane mis en oeuvre.

**10.** Procédé selon l'une des revendication 8 ou 9,
caractérisé en ce qu'
on met en oeuvre un acide monobasique.

**11.** Procédé selon au moins l'une quelconque des revendications 8 à 10,
caractérisé en ce qu'
on effectue la réaction dans une plage de températures comprise entre 0 et 100°C.

**12.** Procédé selon au moins l'une quelconque des revendications 8 à 11,
caractérisé en ce qu'
on effectue la séparation par distillation de l'alcool sous pression réduite.

**13.** Procédé selon au moins l'une quelconque des revendications 8 à 12,
caractérisé en ce qu'
on ajoute, en vue de la réduction de la formation de mousse avant et/ou pendant la séparation par distillation de l'alcool, un agent anti-mousse.

**14.** Procédé selon au moins l'une quelconque des revendications 8 à 13,
caractérisé en ce qu'
on ajuste la teneur résiduelle en alcool dans les compositions contenant un organopolysiloxane, à des valeurs $<$ 1,5 % en poids.

**15.** Procédé selon au moins l'une quelconque des revendications 8 à 14,
caractérisé en ce qu'
on purifie ultérieurement le produit obtenu après la séparation par distillation de l'alcool, par sédimentation et/ou filtration.

**16.** Utilisation des compositions contenant un organopolysiloxane, à base d'eau, selon l'une quelconque des revendications 1 à 15,
pour rendre hydrophobes les surfaces, pour rendre hydrophobes des matériaux de construction minéraux, pour la protection des constructions et des façades, pour le revêtement des fibres de verre, pour la silanisation des substances de charge et des pigments, pour l'amélioration des propriétés rhéologiques des dispersions de polymères et des émulsions, pour rendre hydrophobes les textiles, le cuir, les produits cellulosiques et amylacés, comme agents de démoulage, comme agent réticulant, comme intermédiaire d'adhésion ainsi que comme additifs pour des colorants et des laques.